# EUROPEAN PATENT SPECIFICATION

(11) **EP 1 495 921 B1**
(45) Date of publication and mention of the grant of the patent: **17.01.2007**
(21) Application number: 04015793.5
(22) Date of filing: 05.07.2004
(51) Int. Cl.: B60R 21/20

(54) **Air-bag cover**
Gassackabdeckung
Couvercle de sac gonflable

(30) Priority: 10.07.2003 GB 0316209
(43) Date of publication of application: 12.01.2005
(73) Proprietor: AUTOLIV DEVELOPMENT AB, 447 83 Vargarda (SE)
(72) Inventor: Cruet, Jean-Marie, 76240 Bonsecours (FR); Baillivet, Remi, 76220 Dampierre-en-Bray (DE); Delarue, Stéphane, 76116 Catenay (FR)
(74) Representative: Parry, Simon James

(56) References cited:
- DE-A- 10 148 279
- DE-A- 19 749 173
- US-A- 6 135 489
- US-A1- 2002 050 704
- PATENT ABSTRACTS OF JAPAN vol. 1998, no. 10, 31 August 1998 (1998-08-31) & JP 10 129383 A (NIPPON PLAST CO LTD), 19 May 1998 (1998-05-19)
- PATENT ABSTRACTS OF JAPAN vol. 1997, no. 03, 31 March 1997 (1997-03-31) & JP 8 301044 A (NIPPON PLAST CO LTD), 19 November 1996 (1996-11-19)

## Description

**THE PRESENT INVENTION** relates to an air-bag, and more particularly relates to an air-bag cover suitable for use with a so-called "driver's air-bag" - that is to say an air-bag mounted in the steering wheel of a motor vehicle adapted to be inflated in the event that an accident should arise to provide protection for the driver of the vehicle.

It has been common place, for many years, to provide an embellishment, in the form of the "logo" or a trade mark of the manufacturer of the relevant vehicle, in the central part of the steering wheel of the vehicle.

In later years it has become common place to provide an air-bag mounted in the steering wheel of the vehicle, the uppermost part of the steering wheel comprising an air-bag cover which is provided with so-called "split lines". These split lines are provided so that on inflation of the air-bag, the cover may break in a predetermined manner, the split lines defining flaps or "doors" which open outwardly to permit the air-bag to emerge and occupy an appropriate position to provide protection for the driver of the vehicle.

The air-bag cover is typically made of a plastics material, and whilst, in some cases, it has been possible to mould a logo or trade mark into the plastics material forming the air-bag cover, it has also been found to be appropriate to mount an embellishment, which may comprise a small plate, which carries the trade mark or logo, in position on the air-bag cover.

Typically the most convenient place for embellishment lies directly above a split line.

When the embellishment is mounted above the split line in this way, it is necessary for the embellishment to be mounted more securely to the air-bag cover on one side of the split line then on the other side of the split line, since otherwise the embellishment may prevent the split line from actually splitting, thus preventing proper deployment of the air-bag.

US 6135489 discloses an air-bag cover which is provided with a tear seam or split line, with an embellishment in the form of an emblem which covers the split line. The emblem is held in position by means of pins, the pins on one part of the emblem which is to be on one side of the split line being "breakaway" pins, while the pins on the other side of the split line are solid pins.

It is to be appreciated that when the air-bag of US 6135489 is actuated, the described emblem remains attached securely to one of the parts of the air-bag on one side of the split line, and thus an exposed or free edge of the emblem is directed towards the vehicle occupant when the cover is opened on inflation of the air-bag. This can lead to difficulties, especially if the driver is "out of position" - for example leaning forwardly, at the instant that the air-bag is inflated.

It has also been proposed to modify the configuration of the split line in an air-bag cover where an embellishment is provided, so that the embellishment may be mounted totally to one side of the split line. However, providing a split line with sharp "corners" is not ideal, and the presence of such sharp corners may lead to the end result that the cover does not split along the split line in the manner originally intended.

DE10148279 discloses an air-bag module cover provided with a split line with the features of the preamble of claim 1. A central part of the split line is of "T"-form and an embellishment in the form of an emblem is provided which lies over the central part of the T-form.

DE19749173 discloses an air-bag cover for a motor vehicle steering wheel which is provided with a split line and a central embellishment mounted to the air-bag cover. The central embellishment is not mounted over the split line.

JP10129383 discloses an air-bag cover provided with an embellishment which is retained in an aperture on the air-bag cover by means of an upper ring which is mounted on an upper surface of the air-bag, and a lower ring which is mounted on the undersurface of the air-bag. The embellishment is not, however, mounted over the split line of the air-bag cover.

The arrangement of JP08301044 is generally similar to that of JP10129383. Again, an embellishment is provided mounted within an aperture formed on an air-bag cover. The embellishment is sandwiched between upper and lower rings in order to retain it to the air-bag cover.

The present invention seeks to provide an improved air-bag cover.

According to this invention there is provided an air-bag cover, the air-bag cover being provided with a split line, the air-bag cover being provided with an embellishment mounted in superimposition on the split line, the embellishment incorporating a ring provided with lines of mechanical weakness at two diametrically opposed positions, the lines of mechanical weakness being substantially superimposed over the split line, the part of the embellishment to one side of the split line being mounted to that part of the cover which lies on one side of the split line and the part of the embellishment which lies to the other side of the split line being mounted to that part of the air-bag cover which lies to the other side of the split line, wherein the ring traps a platelet against the air-bag cover, and the ring is provided with radial channels in the upper surface and co-aligned radial channels in the lower surface to form the lines of mechanical weakness.

In order that the invention may be more readily understood, and so that further features thereof may be appreciated, the invention will now be described, by way of example, with reference to the accompanying drawings in which:
FIGURE 1 is an exploded view an air-bag cover and an embellishment;
FIGURE 2 is an enlarged upper perspective view of ring forming part of the embellishment of Figure 1;
FIGURE 3 is an underneath perspective view of the ring of Figure 2; and
FIGURE 4 is an underneath perspective view of an alternative form of embellishment.

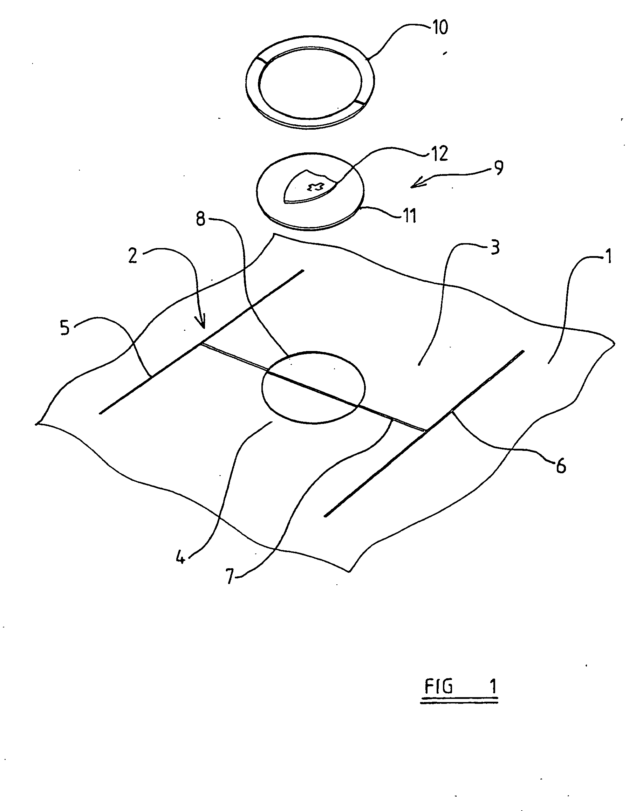

Referring initially to Figure 1 of the accompanying drawings part of an air-bag cover 1 is illustrated, the air-bag being for use with a driver's air-bag, which is mounted to be within the steering wheel of a motor vehicle.

The central part of the cover of the air-bag is illustrated, that central part being provided with a "H" shaped split line 2. It can be appreciated that this form of split line effectively defines two flaps or "doors" 3, 4 which can open to permit the air-bag to emerge on inflation of the air-bag.

Thus the split line comprises two spaced apart parallel lines 5, 6 interconnected by an intermediate transverse split line 7. The central region of the transverse split line 7 passes through a recess 8 formed in the air-bag cover. The recess 8 is to receive an embellishment.

Figure 1 illustrates an embellishment 9 to be received within the recess, the embellishment comprising a ring 10 and a disc or platelet 11. The embellishment 9 is to be mounted in superimposition on the transverse split line 7.

The ring 10 is to be mounted to the air-bag cover 1 to trap and retain the platelet 11 in position.

The upper surface of the platelet is provided with a logo or trade mark 12 which, when the embellishment is in position, is visible through the central aperture provided in the ring 10, the trade mark or logo being the trade mark or logo of a vehicle manufacturer.

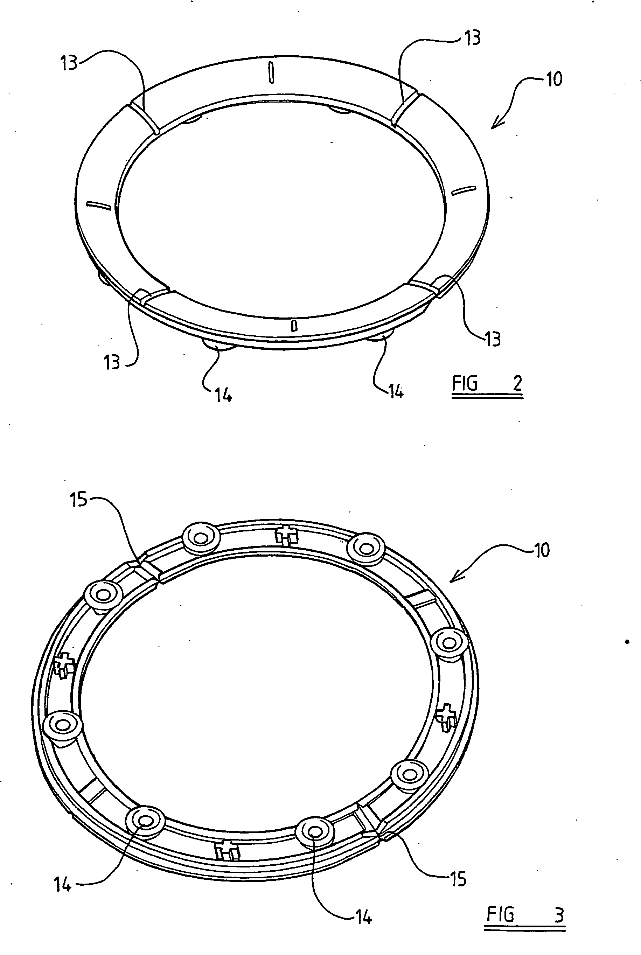

The ring 10 is shown in more detail in Figure 2 and 3 which show the ring, in perspective from above and from below.

The ring may be formed of a plastics material and may be chrome plated or otherwise treated to have a shiny or attractive appearance.

The upper surface of the ring 10 is provided with four equi-angularly spaced radially directed grooves or channels 13. Each groove or channel extends across the whole width of the ring, and thus each groove or channel tends, to a certain extent, to reduce the strength of the ring in the region of the channel.

As can be seen from Figure 3 the under surface of the ring is provided with a plurality of substantially evenly spaced mounts 14 which are utilised to mount the ring to the air-bag cover 1. The mounting may receive mounting pins or the like which pass through the cover. However, the underside of the ring is also provided with two diametrically opposed channels 15 which again reduce the thickness of the ring. The channels 15 provided in the under surface of the ring 10 are co-aligned with two of the channels 13 provided in the upper surface of the ring and thus in the region of the co-aligned channels the ring is extremely weak. The co-aligned channels thus provide lines of mechanical weakness.

It is to be appreciated that the ring is mounted to the air-bag cover 1 by means of the mounts 14, thus trapping the platelet 11 between the ring 10 and the air-bag cover. The ring is mounted in position so that the lines of mechanical weakness constituted by the co-aligned channels 13 in the upper surface and the co-aligned channels 15 in the lower surface of the ring are themselves co-aligned with the intermediate split line 7.

When the air-bag protected by the air-bag cover 1 is deployed, the cover will split along the split line 7 and because the parts of the ring 10 which care co-aligned with the split line 7 are themselves weak, the ring will split at the lines of mechanical weakness formed by the co-aligned channels, with half the ring 10 remaining on the flap or door 3 and the other half of the ring 10 remaining on the flap or door 4. The platelet 11 will be released.

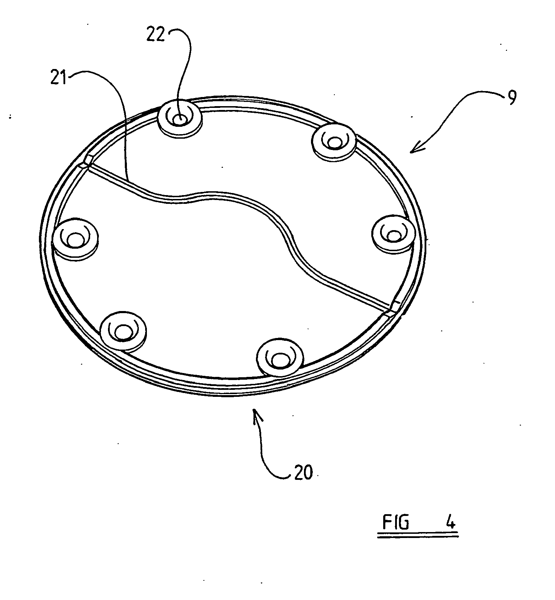

In an alternative embodiment of the invention, as shown in Figure 4, the embellishment 9 is formed of a single disc or platelet 20, the disc or platelet having a line of mechanical weakness 21 formed in its under surface which extends across the platelet terminating at two diametrically opposed points. The line of weakness may be straight or may, as shown in Figure 4, be curved. The platelet 20 is provided with mounts 22 by means which the platelet may be mounted in a recess, such as the recess 8 formed on an air-bag cover 1 as shown in Figure 1. The mounts may receive pins or the like.

The platelet 20 of Figure 4 will again be mounted in position so that opposed ends of the line of mechanical weakness 21 are superimposed on the intermediate split line 7.

On deployment of the air-bag, part of the platelet 20 on one side of the split line will remain affixed to one flap or door 3, as shown in Figure 1 and the part on the other side of the split line will remain attached to the other flap or door 4 as shown in Figure 1.

Whilst the invention has been described with reference to two examples it is to be appreciated that many modifications may be effected.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag cover (1), the air-bag cover (1) being provided with a split line (7), the air-bag cover (1) being provided with an embellishment (10) mounted in superimposition on the split line (7), the embellishment (10) incorporating a ring provided with lines of mechanical weakness at two diametrically opposed positions, the lines of mechanical weakness being substantially superimposed over the split line (7), the part of the embellishment (10) to one side of the split line (7) being mounted to that part (3) of the cover (1) which lies on one side of the split line (7) and the part of the embellishment (10) which lies to the other side of the split line (7) being mounted to that part (4) of the air-bag cover (1) which lies to the other side of the split line (7), **characterised in that** the ring traps a platelet (11) against the air-bag cover (1), and the ring is provided with radial channels (13) in the upper surface and co-aligned radial channels in the lower surface to form the lines of mechanical weakness.

## Patentansprüche

1. Airbagabdeckung (1), wobei die Airbagabdeckung (1) mit einer Reißlinie (7) versehen ist, und wobei die Airbagabdeckung (1) mit einer Verzierung (10) versehen ist, die in Überlagerung auf der Reißlinie (7) angebracht ist, wobei die Verzierung (10) einen Ring aufweist, der mit mechanischen Schwächungslinien an zwei diametral gegenüberliegenden Positionen versehen ist, wobei die mechanischen Schwächungslinien im wesentlichen überlagert über der Reißlinie (7) angeordnet sind, wobei der Teil der Verzierung (10) auf einer Seite der Reißlinie (7) an dem Teil (3) der Abdeckung (1) angebracht ist, der auf einer Seite der Reißlinie (7) liegt, und der Teil der Verzierung (7), der auf der anderen Seite der Reißlinie (7) liegt, auf dem Teil (4) der Airbagabdeckung (1) angebracht ist, der auf der anderen Seite der Reißlinie (7) liegt, **dadurch gekennzeichnet, daß** der Ring ein Plättchen (11) gegen die Airbagabdeckung (1) gefangen hält und der Ring mit radialen Kanälen (13) in der oberen Oberfläche und mit damit ausgerichteten radialen Kanälen in der unteren Oberfläche versehen ist, um die mechanischen Schwächungslinien zu bilden.

## Revendications

1. Un couvercle pour sac gonflable de sécurité (1), le couvercle pour sac gonflable de sécurité (1) étant muni d'une ligne de division (7), le couvercle pour sac gonflable de sécurité (1) étant muni d'une décoration (10) montée en superposition sur la ligne de subdivision (7), la décoration (10) incorporant un anneau, muni de lignes de faiblesse mécanique en deux positions diamétralement opposées, les lignes de faiblesse mécanique étant sensiblement superposées sur la ligne de division (7), la partie de la décoration (10) sur un côté de la ligne de division (7) étant montée sur la partie (3) du couvercle (1) qui est située sur un côté de la ligne de division (7), et la partie de la décoration (10) située de l'autre côté de la ligne de division (7) étant montée sur une partie (4) du couvercle pour sac gonflable de sécurité (1) située sur l'autre côté de la ligne de division (7), **caractérisé en ce que** l'anneau emprisonne une plaquette (11) contre le couvercle pour sac gonflable de sécurité (1), et l'anneau est muni de canaux (13) radiaux dans la surface supérieure, et de canaux radiaux en alignement dans la surface inférieure, afin de former les lignes de faiblesse mécanique.
